# EUROPÄISCHE PATENTANMELDUNG

(11) **EP 1 587 088 A1**
(43) Veröffentlichungstag der Anmeldung: **19.10.2005**
(21) Anmeldenummer: 04008968.2
(22) Anmeldetag: 15.04.2004
(51) Int. Cl.: G11B 7/125

(54) **Verfahren zum Bestimmen der optimalen Schreibleistung**

(71) Anmelder: DEUTSCHE THOMSON-BRANDT GMBH, 78048 Villingen-Schwenningen (DE)
(72) Erfinder: Reiner, Gerhard, 78052 Villingen (DE)
(74) Vertreter: Thies, Stephan

(57) **Zusammenfassung**

Die Erfindung betrifft ein Verfahren zum Bestimmen der optimalen Schreibleistung in einem Gerät zum Beschreiben optischer Aufzeichnungsträger (1), welches die folgenden Schritte aufweist:
Auf einen Schreibbefehl hin Ermitteln eines für einen Testschreibvorgang zu verwendenden Bereichs (4) des optischen Aufzeichnungsträgers (1);
Ausführen des Testschreibvorgangs in dem ermittelnden Bereich (4);
Ermitteln der optimalen Schreibleistung anhand der im Testschreibvorgang geschriebenen Daten.

Aufgabe der Erfindung ist es, ein derartiges Verfahren dahingehend zu verbessern, daß es im Mittel in kürzerer Zeit ausführbar ist.

Erfindungsgemäß wird zum Ermitteln des für einen Testschreibvorgang vorgesehenen Bereichs (4) ein Sprung (S21, S31) von einem außen liegenden Bereich des optischen Aufzeichnungsträgers (1) nach innen durchgeführt, während der Endphase (S22, S32) dieses Sprungs (S22, S32) wird geprüft, ob ein auf vorhandene Aufzeichnungen hindeutendes Signal (RECD, HF) vorhanden ist, und bei Ausbleiben dieses Signals (RECD, HF) wird der Sprung (S22, S23) abgebrochen, und die am Ende dieses Sprungs (S22, S32) vom optischen Aufzeichnungsträger (1) gewonnene Information zum Ermitteln des gesuchten Bereichs (4) genutzt.

## Beschreibung

Die vorliegende Erfindung betrifft ein Verfahren zum Bestimmen der optimalen Schreibleistung in einem Gerät zum Beschreiben optischer Aufzeichnungsträger. Im allgemeinen weist ein derartiges Verfahren die folgenden Schritte auf: auf einen Schreibbefehl hin wird ein Bereich des optischen Aufzeichnungsträgers ermittelt, der für einen Testschreibvorgang zu verwenden ist. Dieser Bereich liegt in einem allgemein für Testschreibvorgänge vorgesehenen Bereich und ist im allgemeinen an den Bereich angrenzend, in dem der vorhergehende Testschreibvorgang ausgeführt wurde. Der Testschreibvorgang, der üblicherweise von einer für das jeweilige Gerät und den Typ des optischen Aufzeichnungsträgers geeigneten mittleren Leistung ausgehend gestufte höhere und niedrigere Schreibleistungen verwendet, wird in dem ermittelten Bereich durchgeführt. Anschließend wird die optimale Schreibleistung anhand der im Testschreibvorgang geschriebenen Daten ermittelt. Dazu werden die geschriebenen Daten daraufhin untersucht, in welcher Leistungsstufe optimale Lesbarkeit erzielt wurde und die dieser Stufe entsprechende Leistung wird als optimale Schreibleistung weiterverwendet.

Aufgabe der Erfindung ist es, ein derartiges Verfahren dahingehend zu verbessern, daß es im Mittel in kürzerer Zeit ausführbar ist.

Erfindungsgemäß ist dazu vorgesehen, daß zum Ermitteln des für einen Testschreibvorgang zu verwendenden Bereichs ein Sprung von der aktuellen Position in Richtung auf den für Testschreibvorgänge vorgesehenen Bereich erfolgt, im allgemeinen von einem außenliegenden Bereich des optischen Aufzeichnungsträgers nach innen, und zumindest während der Endphase dieses Sprungs geprüft wird, ob ein auf vorhandene Aufzeichnungen hindeutendes Signal vorhanden ist. Bei Ausbleiben dieses Signals wird der Sprung abgebrochen, und die am Ende dieses Sprungs vom optischen Aufzeichnungsträger gewonnene Information zum Ermitteln des gesuchten, für den Testschreibvorgang zu verwendenden Bereichs genutzt. Das Prüfen auf ein auf vorhandene Aufzeichnungen hindeutendes Signal kann sowohl während des gesamten Sprungs durchgeführt werden. Es reicht aber im allgemeinen aus, dies nur in der Endphase des Sprungs durchzuführen, vorteilhafterweise ab einem bekannten Radius, ab dem der interessierende Bereich des optischen Aufzeichnungsträgers beginnt. Das Ausbleiben dieses auf vorhandene Aufzeichnungen hindeutenden Signals deutet auf den Beginn der Daten hin, die die gesuchte Information über den für den Testschreibvorgang zu verwendenden Bereich enthalten. Dies ist beispielsweise die Adresse des gesuchten Bereichs, oder eine Information, aus der die Adresse des gesuchten Bereichs berechnet wird oder ähnliches. Ein Vorteil dieses Verfahrens ist, daß eine schnellere Bestimmung der optimalen Schreibleistung ermöglicht ist, da die für den Testschreibvorgang zu verwendende Adreßinformation schnell ermittelt wird. Üblicherweise wird über das vordere Ende des bereits beschriebenen Bereichs hinausgesprungen und anschließend langsam, der Spur folgend, sich diesem Bereich angenähert.

Erfindungsgemäß ist vorgesehen, daß der Sprung in einem Bereich des optischen Aufzeichnungsträgers beendet wird, in dem Angaben über den zum Testschreibvorgang zu verwendenden Bereich vorhanden sind. Dies hat den Vorteil, daß sofort der tatsächlich beschriebene Teil dieses Bereichs erreicht wird, und sofort die erforderliche Information ermittelbar ist. Die entsprechende Stelle ist sicher erkennbar, da ein Bereich mit Angaben über den zum Testschreibvorgang zu verwendenden Bereich im allgemeinen bereits mit optimierter Schreibleistung geschrieben ist, und daher gut auslesbar ist. Von dort wird, nach Ermitteln der entsprechenden Information, direkt zu dem zum Testschreibvorgang zu verwendenden Bereich gesprungen. Ein derartiger Sprung liegt zeitlich in der Größenordnung von 10-20 ms.

Vorteilhafterweise wird der Sprung in einem Bereich des optischen Aufzeichnungsträgers beendet, der für Testschreibvorgänge vorgesehen ist. Dies hat den Vorteil, daß hierbei der für Testschreibvorgänge zu verwendende Bereich noch schneller erreicht wird, da kein weiterer Sprung von einem Bereich mit Angaben zum für den Testschreibvorgang zu verwendenden Bereich erforderlich ist. Im allgemeinen ist auch hier sicher erkennbar, wo der Testschreibvorgang zu beginnen hat, obwohl der im für Testschreibvorgänge vorgesehene Bereich, in dem ja gerade auch nicht-optimale Schreibleistungen verwendet werden, teilweise schlecht lesbar geschriebene Informationen vorhanden sind.

Erfindungsgemäß ist vorgesehen, daß erst nach Ausbleiben des auf vorhandene Aufzeichnungen hindeutenden Signals für eine vorbestimmte Zeit der Sprung abgebrochen wird. Dies hat den Vorteil, daß sichergestellt ist, daß der Testschreibvorgang nicht auf bereits in bei früheren Testschreibvorgängen beschriebenen Bereichen des optischen Aufzeichnungsträgers ausgeführt wird. Da bei jedem Testschreibvorgang auch Daten mit optimaler Leistung geschrieben werden, ist zumindest ein Teil dieses Bereichs erkennbar und somit eindeutig zuzuordnen.

Vorteilhafterweise wird nach dem Ermitteln der optimalen Schreibleistung diese mit einer für das jeweilige Gerät kennzeichnenden Identifikation in einem vordefinierten Bereich des optischen Aufzeichnungsträgers gespeichert. Dies hat den Vorteil, daß die ermittelte optimale Schreibleistung gegebenenfalls als Startwert für den nächsten Testschreibvorgang verwendbar ist. In diesem Fall ist vorgesehen, von diesem für den optischen Aufzeichnungsträger bereits als gut geeignet bekannten Startwert in kleineren Schrittweiten den Testschreibvorgang auszuführen, und somit auf ein weiter optimiertes Ergebnis für die optimale Schreibleistung zu gelangen. Man befindet sich somit zentraler im zulässigen Toleranzbereich, was die Lesbarkeit der geschriebenen Daten auch bei Temperaturschwankungen und Alterungserscheinungen erhöht. Auch im Fall einer fehlerhaften Bestimmung der optimalen Schreibleistung ist es somit ermöglicht, ersatzweise den jeweils letzten gespeicherten optimalen Schreibleistungswert als Ersatzwert zu verwenden.

Vorteilhafterweise ist der vordefinierte Bereich, in dem der Wert der ermittelten optimalen Schreibleistung abgespeichert wird, ein Bereich, der für Angaben zum für einen Testschreibvorgang zu verwendenden Bereich vorgesehen ist. Dies hat den Vorteil, daß dieser oftmals nur "Leerdaten", sogenannte Dummies, enthaltende Bereich mit sinnvollen Informationen beschrieben wird.

Die Erfindung betrifft auch ein Gerät zum Durchführen des erfindungsgemäßen Verfahrens.

Das erfindungsgemäße Verfahren eignet sich für Geräte, die gemäß DVD+R Standard (ECMA-349) arbeiten. Aber auch bei Geräten, die gemäß anderen optischen Aufzeichnungsstandards arbeiten, kann das erfindungsgemäße Verfahren sinnvoll Anwendung finden.

Weitere Vorteile der Erfindung und erfindungsgemäße Details sind auch der nachfolgenden Beschreibung eines Ausführungsbeispiels zu entnehmen.

Dabei zeigen:
- Fig. 1: ein erstes Verfahren zum Bestimmen der optimalen Schreibleistung,
- Fig. 2: ein erfindungsgemäßes Verfahren, und
- Fig. 3: ein weiteres erfindungsgemäßes Verfahren.

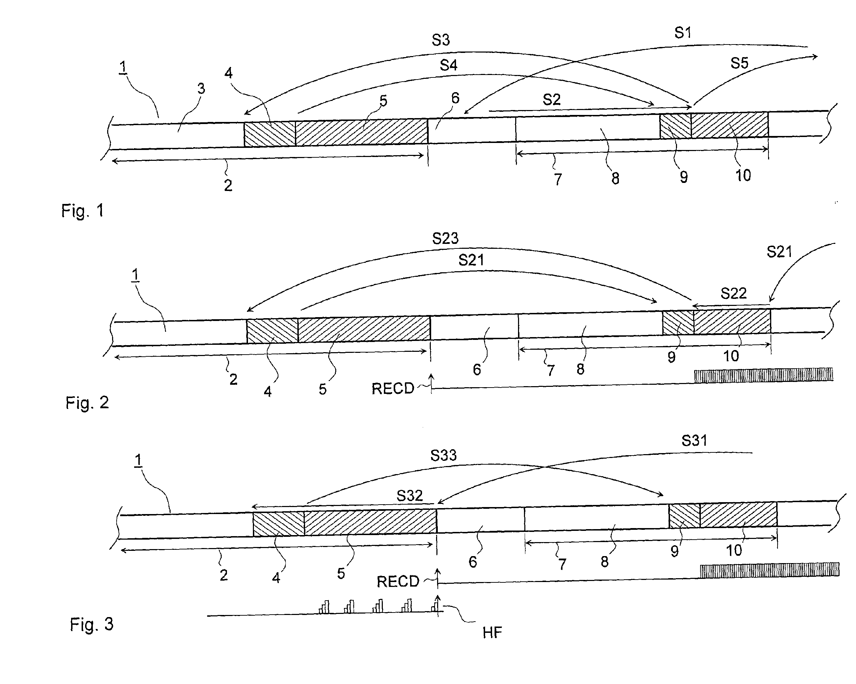

Fig. 1 zeigt ein erstes Verfahren zum Bestimmen der optimalen Schreibleistung in einem Gerät zum Beschreiben optischer Aufzeichnungsträger. Ein Querschnitt durch einen Teil eines optischen Aufzeichnungsträgers 1 ist mit unterschiedlichen Bereichen dargestellt. In der Abbildung links geht es zum inneren Bereich des optischen Aufzeichnungsträgers 1, in der Abbildung rechts geht es Richtung zum äußeren Bereich des optischen Aufzeichnungsträgers 1. Im linken Bereich der Figur ist ein für Testschreibvorgänge vorgesehener Bereich 2 dargestellt, der einen unbeschriebenen Bereich 3, einen für den nächsten Testschreibvorgang zu verwendenden Bereich 4 und einen bereits durch Testschreibvorgänge beschriebenen Bereich 5 aufweist. An den für Testschreibvorgänge vorgesehenen Bereich 2 schließt sich ein Startbereich 6 für einen Bereich 7 an, in dem Angaben über den zum Testschreibvorgang zu verwendenden Bereich vorhanden sind. Auch der Bereich 7 weist einen unbeschriebenen Bereich 8, einen für Informationen über den nächsten Testschreibvorgang vorgesehenen Bereich 9 und einen bereits beschriebenen Bereich 10 auf. Gemäß dem DVD+R Standard wird der für Testschreibvorgänge vorgesehene Bereich 2 als "Inner Disk Test Zone" bezeichnet, der Startbereich 6 als "Count Zone Run-in" und der mit Angaben über die für Testschreibvorgänge zu verwendenden Bereiche vorgesehene Bereich 7 als "Inner Disk Count Zone".

In einem ersten Sprung S1, der durch einen Pfeil dargestellt ist, wird von einem äußeren Bereich des optischen Aufzeichnungsträgers in den Startbereich 6 gesprungen. Dort wird auf die Spur des optischen Aufzeichnungsträgers eingekoppelt und der Spur während eines zweiten Sprungs S2, der ebenfalls durch einen Pfeil dargestellt ist, über den unbeschriebenen Bereich 8 und den daran anschließenden Bereich 9 bis zum beschriebenen Bereich 10 gefolgt. Sprung S1 und Sprung S2 sind vorteilhafterweise ein schneller und ein langsamer Teil eines einzigen Sprungs. Im beschriebenen Bereich 10 wird die Information über den für den nächsten Testschreibvorgang zu verwendenden Bereich gewonnen und im Sprung S3 zu diesem Bereich 4 gesprungen. Im für den nächsten Testschreibvorgang zu verwendenden Bereich 4 wird der nächste Testschreibvorgang ausgeführt, und an dessen Ende im Sprung S4 zum Beginn des für Informationen über den nächsten Testschreibvorgang vorgesehenen Bereichs 9 gesprungen, um diesen Bereich 9 zu beschreiben. Erfindungsgemäß wird dabei statt sogenannter Leerinformation der beim Testschreibvorgang ermittelte optimale Wert der Schreibleistung abgespeichert. Beim nächsten Bestimmen der optimalen Schreibleistung wird dabei von diesem Wert als Startwert ausgegangen. Anschließend wird im Sprung S5 an die Stelle des optischen Aufzeichnungsträgers gesprungen, an der die Aufzeichnung erfolgen soll.

Fig. 2 zeigt ein erfindungsgemäßes Verfahren anhand eines optischen Aufzeichnungsträgers 1, der wie zu Fig. 1 im Teilquerschnitt schematisch dargestellt ist. Gleiche Elemente sind mit gleichen Bezugszeichen versehen und werden hier nicht notwendigerweise erneut erwähnt. Man erkennt im unteren Bereich der Figur ein Signal RECD, welches auf das Vorhandensein von Aufzeichnungen hindeutet. Es ist beispielsweise ein dem Fachmann geläufiges Hochfrequenz-oder HF-Signal. Es liegt während des ersten Teils des Sprungs, Sprung S21, von einem äußeren Bereich des optischen Aufzeichnungsträgers 1 in Richtung auf dessen inneren Bereich, sowie in dessen zweiten Teil, Sprung S22, an. Der Sprung S22 ist als langsamer Sprung dargestellt, beispielsweise als Sprung von Spur zu Spur. Bei diesem Sprung von Spur zu Spur wird der beschriebene Bereich 10 überquert und an dessen innerem Ende festgestellt, daß kein Signal RECD mehr anliegt. Daraufhin wird der Sprung S22 sofort beendet, die am Beginn des beschriebenen Bereichs 10 liegende Information ermittelt, und daraus die Startadresse des für den nächsten Testschreibvorgang zu verwendenden Bereichs 4 bestimmt. Dorthin wird im Sprung S23 gesprungen, um den für den nächsten Testschreibvorgang zu verwendenden Bereich 4 zu beschreiben. Anschließend wird, wie zu Fig. 1 beschrieben, im Sprung S24 zum Beginn der für Informationen über den nächsten Testschreibvorgang vorgesehenen Bereichs 9 gesprungen, um diesen entsprechend zu beschreiben.

Fig. 3 zeigt ein weiteres erfindungsgemäßes Verfahren. Dabei wird im Sprung S31 von einem äußeren Bereich des optischen Aufzeichnungsträgers über den Bereich 7 hinweg schnell zur Grenze zwischen dem für Testschreibvorgänge vorgesehenen Bereich 2 und dem Startbereich 6 gesprungen und im zweiten Teil dieses Sprungs, dem Sprung S32 langsam von dort aus Richtung Innenbereich des optischen Aufzeichnungsträgers gesprungen. Auch hierbei wird ein Signal HF vom optischen Aufzeichnungsträger gelesen, welches in seiner Intensität schwankt und ein Maximum dort aufweist, wo bei vorhergehenden Testschreibvorgängen die optimale Schreibleistung angelegen hat. Nach dem letzten Auftreten eines dieser Maxima wird der Sprung S32 für eine vorbestimmte Zeit, beispielsweise 10 bis 20 ms, fortgesetzt und dann beendet. Anschließend wird auf die Spur des optischen Aufzeichnungsträgers 1 eingekoppelt und der für den nächsten Testschreibvorgang zu verwendende Bereich 4 beschrieben. Von dort aus wird im Sprung S33 zum Bereich 9 gesprungen, um diesen wie oben angegeben, zu beschreiben.

Die Erfindung betrifft in anderen Worten eine optimale Schreibleistungs-Einstellung. Bei einer derartigen Einstellung wird für eine bestimmte Kombination aus optischen Aufzeichnungsträger 1, auch als Disk bezeichnet, und Laufwerk durch stufenweise Erhöhung der Schreiblaser-Leistung die optimale Leistung ermittelt. Die Erfindung betrifft hauptsächlich einmal beschreibbare Medien wie z.B. DVD+R. Bei diesen befindet sich im Lead-in Bereich der Disk (Innenbereich der Disk) eine Kalibrierungszone, Bereich 4, die für Schreibversuche verwendet werden kann. Angrenzend an diese Zone, Bereich 4, befindet sich eine sogenannte Inner Disc Count-Zone, Bereich 7, in welcher vermerkt wird, welcher Bereich der (einmal beschreibbaren) Kalibrierungszone, des Bereichs 4, schon verwendet wurde und somit nicht mehr zur Verfügung steht. Nun wird die nächstmögliche Position für eine Kalibrierung vom Laufwerk ermittelt. Dies geschieht z.B. dadurch, daß der Abtaststrahl des Geräts an den Anfang der Count Zone, des Bereichs 7, positioniert wird und auf der Spur bleibend wartet, bis durch Detektion eines Signals RECD auf der Spur die gesuchte Markierung, der Bereich 10, erreicht wurde. Die eigentliche Startadresse für die Kalibrierung wird dann durch Adreßumrechnungen, wie sie z.B. im Standard beschrieben ist, ermittelt. Dieses Verfahren hat den Nachteil, daß bei geringen Schreibgeschwindigkeiten, wie sie bei Consumer-Geräten immer noch verwendet werden, im ungünstigsten Fall recht viel Zeit vergehen kann, bis die korrekte Position gefunden wird. Bei 1x DVD Geschwindigkeit beträgt diese Zeit bis zu 256*24ms = 6.1 Sekunden. Das bedeutet, vom Drücken der Aufnahmetaste bis zum tatsächlichen Start der Aufnahme können mehr als sechs Sekunden vergehen, was eventuell inakzeptabel ist.

Bei der Erfindung wird ebenfalls Gebrauch von der Detektion eines Signals RECD gemacht. Hierbei wird jedoch nicht von der im Standard beschriebenen Count Zone Run-In, dem Bereich 6, ausgegangen, sondern während des Rücksprungs S21, S22, S31, S32 von einer weiter außen gelegenen Position der Disk wird das RECD- Signal oder das HF-Signal gescannt und bei Ausbleiben des Signals wird der Sprung S22, S32 sofort abgebrochen und durch Ermittlung der zugehörigen Adresse die Position für die Kalibrierung ermittelt. Die Erfindung reduziert die Zeit, die für die Durchführung der Ermittlung der optimalen Schreibleistung verstreicht und damit die Zeit, die vergeht, zwischen dem Drücken der Aufnahmetaste und dem tatsächlichen Start der Aufzeichnung.

Ein weiterer Punkt der Erfindung ist, daß man den Bereich 7 oder einen anderen geeigneten Datenbereich, der laut Standard beliebig beschrieben werden darf, dazu nutzt, den ermittelten und für gut befundenen Wert für die Schreib Laser Power dort abspeichert. Dieser wird dann mit einer Kennung des verwendeten Laufwerks versehen, da jedes Laufwerk aufgrund unterschiedlicher Optik einen anderen Wert für die optimale Schreibleistung ermitteln wird. Nichtsdestotrotz kann der abgespeicherte Wert bei einer gegebenen Disk-Laufwerk-Kombination einen besseren Startwert für weitere Kalibrierungen hergeben als es ein Default-Wert aus einer standardmäßig vorgesehenen Tabelle tut. Falls die Leistungs-Kalibrierung einmal fehlschlagen sollte, kann der abgespeicherte Wert auch direkt für den eigentlichen Schreibvorgang verwendet werden.

Ein weiterer Vorteil der Erfindung besteht darin, daß ein Durchführen der Schreibleistungsoptimierung jeweils beim Einlegen des optischen Aufzeichnungsträgers 1 vermieden wird. Ein derartiges Vorgehen reduziert zwar die erforderliche Zeit zwischen Aufnahme-Befehl und Start der Aufnahme, da ja der optimale Wert der Schreibleistung bereits bekannt ist, hat aber den großen Nachteil, die Bereiche 4 und 7 des optischen Aufzeichnungsträgers 1 unnötigerweise zu beschreiben, auch dann, wenn ein optischer Aufzeichnungsträger 1 nur zum Lesen ins Gerät eingelegt wird, eine Einstellung der optimalen Schreibleistung also gar nicht erforderlich ist. Insbesondere bei nur einmal beschreibbaren optischen Aufzeichnungsträgern ist dies von Nachteil, da ein Beschreiben nicht korrekt möglich ist, wenn in den für die Einstellung der optimalen Schreibleistung benötigten Bereichen 4, 7 kein unbeschriebener Bereich mehr vorhanden ist.

## Patentansprüche

1. Verfahren zum Bestimmen der optimalen Schreibleistung in einem Gerät zum Beschreiben optischer Aufzeichnungsträger (1) mit den Schritten
- auf einen Schreibbefehl hin Ermitteln eines für einen Testschreibvorgang zu verwendenden Bereichs (4) des optischen Aufzeichnungsträgers (1),
- Ausführen des Testschreibvorgangs in dem ermittelten Bereich (4),
- Ermitteln der optimalen Schreibleistung anhand der im Testschreibvorgang geschriebenen Daten,
**dadurch gekennzeichnet, daß** zum Ermitteln des für einen Testschreibvorgang vorgesehenen Bereichs (4) ein Sprung (S21, S22; S31, S32) von einem außenliegenden Bereich des optischen Aufzeichnungsträgers (1) nach innen durchgeführt wird, während der Endphase (S22, S32) dieses Sprungs geprüft wird, ob ein auf vorhandene Aufzeichnungen hindeutendes Signal (RECD, HF) vorhanden ist und bei Ausbleiben dieses Signals (RECD, HF) der Sprung (S22, S23) abgebrochen wird, und die am Ende dieses Sprungs (S22, S32) vom optischen Aufzeichnungsträger (1) gewonnene Information zum Ermitteln des gesuchten Bereichs (4) genutzt wird.

2. Verfahren nach Anspruch 1, **dadurch gekennzeichnet, daß** der Sprung (S22) in einem Bereich (7) des optischen Aufzeichnungsträgers (1) beendet wird, in dem Angaben über den zum Testschreibvorgang zu verwendenden Bereich (4) vorhanden sind.

3. Verfahren nach Anspruch 1, **dadurch gekennzeichnet, daß** der Sprung (S32) in einem Bereich (2) des optischen Aufzeichnungsträgers (1) beendet wird, der für Testschreibvorgänge vorgesehen ist.

4. Verfahren nach Anspruch 3, **dadurch gekennzeichnet, daß** erst nach Ausbleiben des auf vorhandene Aufzeichnungen hindeutenden Signals (HF) für eine vorbestimmte Zeit der Sprung (S32) abgebrochen wird.

5. Verfahren gemäß einem der vorhergehenden Ansprüche, **dadurch gekennzeichnet, daß** nach dem Ermitteln der optimalen Schreibleistung diese mit einer Geräteidentifikation in einem vordefinierten Bereich des optischen Aufzeichnungsträgers (1) gespeichert wird.

6. Verfahren gemäß Anspruch 5, **dadurch gekennzeichnet, daß** der vordefinierte Bereich ein Bereich (7) ist, der für Angaben zum für einen Testschreibvorgang zu verwendenden Bereich (4) vorgesehen ist.

7. Gerät zum Durchführen des Verfahrens gemäß einem der Verfahrensansprüche.
